# EUROPEAN PATENT APPLICATION

(11) **EP 2 623 772 A1**
(43) Date of publication of application: **07.08.2013**
(21) Application number: 12382042.5
(22) Date of filing: 06.02.2012
(51) Int. Cl.: F03D 1/06, F03D 11/00

(54) **Wind turbine rotor**

(71) Applicant: Alstom Wind, S.L.U., 08005 Barcelona (ES)
(72) Inventor: Pasquet, Pierre, 08328 ALELLA (ES); Canedo Pardo, Santiago, 08022 BARCELONA (ES)
(74) Representative: ZBM Patents

(57) **Abstract**

Wind turbine rotor comprising a hub (10), blades and at least one pitch system for rotating a blade substantially along its longitudinal axis, the pitch system comprising a motor (20), a drive pinion (21), an annular gear (22) arranged to mesh with the drive pinion (21) and a pitch bearing (23) that comprises an outer bearing ring (231), an inner bearing ring (232) and, between these two bearing rings, one or more rows of rolling elements (230) allowing both bearing rings to rotate relative to each other. One of the hub and blade is connected to the inner bearing ring and the other of the hub and blade is connected to the outer bearing ring, and wherein a reinforcing disc (24) is axially fixed to the bearing ring to which the blade is connected at a side facing the hub, the disc being fixed to the bearing ring by the same fasteners connecting the blade to the bearing.

## Description

The present invention relates to wind turbine rotors, and more particularly relates to wind turbine rotors comprising at least one electromechanical pitch mechanism. The invention further relates to a wind turbine comprising the same.

### BACKGROUND ART

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox.

An important auxiliary system generally provided on wind turbines is the pitch system. Pitch systems are employed for adapting the position of a wind turbine blade to varying wind conditions. A pitch system normally comprises a slew bearing comprising an outer ring, an inner ring and, between these two rings, one or more rows of rolling elements which allow both rings to rotate relative to each other. The blades may thus be rotatably attached to the rotor hub or to an extender via the slew bearing, using fasteners such as studs, bolts or rods to secure the connection. Normally said fasteners are screwed in bushings arranged in the wind turbine blade root.

In some cases, pitch systems may further comprise an annular gear which may be arranged to mesh with a drive pinion operatively connected with a motor, and usually a reducer. When gusts of wind impinge on a blade, the wind forces may act to substantially bend the blade. Such bending has an effect on the loads transmitted to the bearing and the studs securing a blade to the bearing. This way, some of the rolling elements of the bearing may carry larger loads than others, thus deforming the pitch bearing. In those cases, the loads acting on the bearing may cause the linear contact and load transmission between the driven gear and the drive pinion to be shifted from its nominal position and the gear meshing (and the bearing) of such systems may thus suffer deformations. Furthermore, the studs or bolts connecting the blades to the bearing may also be subjected to such uneven loads when gusts of wind impinge on a blade and they may develop cracks, which ultimately may cause them to fail. In such cases, the two bearing rings may tend to separate from each other.

One way to tackle such unevenly distributed loads would be to make the bearing larger in order to increase its stiffness and to limit its deformation. However, this would add weight and cost to the design.

Document US7780417 describes a stiffening element provided between the rotor blade and the pitch bearing, connected to the same via joining means. But this kind of solution can be rather cumbersome to mount and therefore expensive.

Thus, there still exists a need to provide a robust electromechanical pitch bearing which reduces deformations of the bearing and, at the same time, reduces the stress acting on the studs or bolts securing the blade to the bearing, and which is cost-effective.

### SUMMARY OF THE INVENTION

In a first aspect, a wind turbine rotor is provided that comprises a hub, a plurality of blades and at least one pitch system for rotating a blade substantially along its longitudinal axis. The pitch system comprises a motor, a drive pinion, an annular gear arranged to mesh with the drive pinion and a pitch bearing. The pitch bearing comprises an outer bearing ring, an inner bearing ring and, between these two bearing rings, one or more rows of rolling elements which allow both bearing rings to rotate relative to each other, wherein one of the hub and blade is connected to said inner bearing ring and the other of the hub and blade is connected to said outer bearing ring, and wherein a reinforcing disc is axially fixed to the bearing ring to which the blade is connected at a side facing the hub, the disc being fixed to the bearing ring by the same fasteners connecting the blade to the bearing.

According to this aspect, the pitch bearing comprises a disc on the side facing the hub of the bearing ring connected to the blade used as a distancing and reinforcing element. The studs or bolts connecting the blade to the bearing may thus be extended by traversing such a reinforcing ring. This way, their stress levels may be reduced and they will suffer less from fatigue, which may have a positive impact on their life time.

Furthermore, the disc arranged on the side facing the hub of the bearing connected to the blade increases the radial stiffness of the bearing on the bearing ring on which the blade is fixed. The stiffness of the connection between the blade and the bearing may thus be increased. This way, it favours a proper contact between rolling elements and raceways machined in the bearing's rings and the reliability and durability of the pitch bearing may thus be improved. Moreover, such a disc arranged on the side facing the hub of the bearing connected to the blade can be easily mounted from inside the hub and would not substantially affect the mounting process of the blade.

In some embodiments, the disc may be an annular disc. In these cases, a connection between an inside portion of the blade root and an inside portion of the hub is ensured.

In some embodiments, the annular gear may cover substantially a 95° arc segment. This may substantially reduce the amount of gear material used and is sufficient for operation as most wind turbines comprise an angle of approximately 90° between the maximum and minimum pitch positions.

In some embodiments, the annular gear may be made from a plurality of arc segments. This way, if necessary, the gear or gear portions may be easily repaired and/or replaced.

In some embodiments, the annular gear may be arranged on the hub. In these cases, and for a pitch system that further comprises a reducer operatively connected with the motor and the drive pinion, the reducer may be mounted on the disc. In other embodiments, the annular gear may be arranged on the blade. In these cases, the disc may comprise a curved elongated hole through which the drive pinion fixed to the hub can mesh with the annular gear.

In some embodiments, the pitch system may further comprise a lubrication system and the components of the lubrication system may be arranged on the disc. This way, the components of the lubrication system can be arranged inside the blade root which is a substantially closed area. There is thus no need for an additional cover or any other protection means.

Another aspect provides a wind turbine comprising a wind turbine rotor substantially as hereinbefore described.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 shows a perspective view of a wind turbine rotor according to a first embodiment;
Figure 2 shows a cross-sectional view along line A-A of figure 1;
Figure 3 shows a perspective viewed from the bottom of figure 1;
Figure 4 shows a perspective view of a wind turbine rotor according to a second embodiment; and
Figure 5 shows a cross-sectional view along line B-B of figure 4.

### DETAILED DESCRIPTION OF EMBODIMENTS

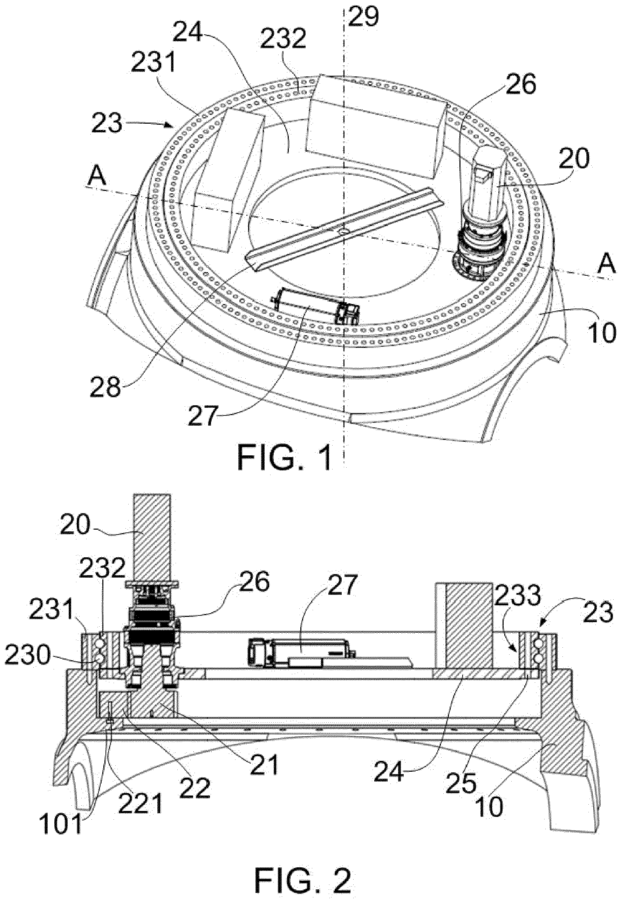

Figure 1 shows a perspective view of a wind turbine rotor according to a first embodiment.

The rotor may comprise a hub 10 to which a plurality of blades (not shown) may be rotatably attached. Pitch systems may be provided for rotating each of the blades substantially along its longitudinal axis. A pitch system may comprise a motor 20, a drive pinion (see figure 2), an annular gear (see figure 2) arranged to mesh with the drive pinion and a pitch bearing 23. The bearing 23 may comprise an outer bearing ring 231 connected with the hub 10 and an inner bearing ring 232 connected with a blade (not shown). Further, a reinforcing disc 24 may be fixed to the inner bearing ring 232 at a side facing the hub 10. The same studs (see figure 2) that connect the blade to the bearing 23 may be used for fixing the reinforcing disc 24 and they may thus be relatively long. In the example of figure 1 the reinforcing disc may be an annular disc or a ring.

Furthermore, the pitch system may further comprise a reducer 26 which may be operatively connected with the motor 20 and the drive pinion. Such a reducer 26 may be mounted on the reinforcing ring 24.

In some cases, a lubrication pump 27 forming part of the pitch system's lubrication system may further be arranged on the reinforcing ring 24, wherein the lubricant may be directed through the inner bearing ring 232 via lubricant circuits machined therein. This way, lubrication tubes passing through the hub and their protections may be substantially reduced.

A supporting beam 28 diametrically arranged on the reinforcing ring 24 may further be provided, fixed to the ring 24. In some cases, such a beam 28 may support lubrication components and may be arranged in such a manner that it traverses a pitch bearing rotational axis 29. This way if e.g. a lubrication pump is arranged on the beam, its main connection for power supply may run along the bearing rotational axis 29 and it may not be affected by a pitch movement of the blade, i.e. the central line will not get tangled up with other components.

Furthermore, as the annular gear 22 may not be arranged on the bearing, there may be more free space on the inner side of the inner bearing ring (see arrow 233 of figure 2) so that lubricant collectors (not shown) such as bottles may be easily used. The use of collectors or bottles is cheaper than the use of extractors.

Figure 2 shows a cross-sectional view along line A-A of figure 1. Figure 2 shows that the bearing 23 may comprise an outer bearing ring 231 connected with the hub 10, an inner bearing ring 232 connected with a blade (not shown), and, between these two bearing rings, one or more rows of rolling elements 230 which may allow both bearing rings to rotate relative to each other. Furthermore, figure 2 shows that the reinforcing ring 24 may be axially fixed to the inner bearing ring 232. Depending on the width of the reinforcing ring, the height of the assembly bearing-reinforcing ring in an axial direction may be enlarged and the studs (only the holes 25 in which the studs will be embedded are shown) connecting the blade to such an assembly can thus be extended.

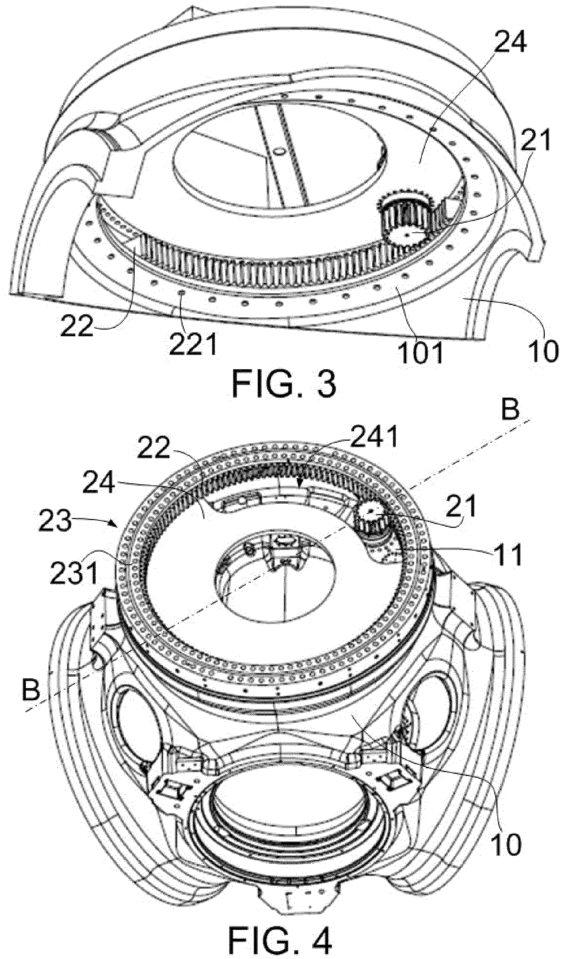

Figure 2 further shows that the annular gear 22 may be radially supported against the hub 10, axially screwed 221 to a flange portion 101 of the hub 10. This is also shown in figure 3, a bottom perspective of figure 1.

Figure 3 shows an embodiment in which the annular gear 22 may cover substantially 95°. In most wind turbines, there is an angle of approximately 90° between the minimum and maximum pitch positions. It is thus desirable that the annular gear covers at least these maximum and minimum pitch positions.

It should be noted, that in other implementations the blades could be attached either at the outer or at the inner bearing ring and the hub would be attached to the other of the outer or inner bearing ring.

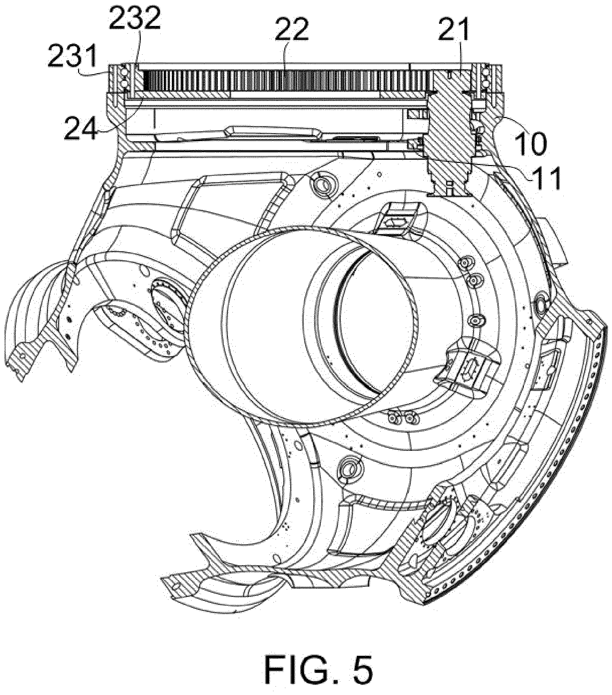

Figures 4 and 5 show a perspective view and a cross-sectional view respectively of a wind turbine rotor according to a second embodiment in which the inner bearing ring 231 may comprise an annular gear 22 which may mesh with a drive pinion 21 of a drive motor (not shown) fixed to the hub 10. In this case, the reinforcing ring 24 may comprise a curved elongated hole 241 through which the drive pinion 21 can mesh with the annular gear 22.

According to figures 4 and 5, the hub 10 may comprise a flange 11 for mounting the drive pinion 21. In some embodiments, the flange may form an integral piece with the hub. In others it may be a separate piece fixed to the hub by welding or by fastening means such as screws, bolts or similar.

The length in an axial direction (thickness) of a reinforcing disc may substantially depend on the size of the wind turbine blade and the forces acting on it and may be approximately between 30 - 150 mm, e.g. between 50 - 120 mm.

In further embodiments the reinforcing ring may be a circular disc. In such cases the disc may comprise a central opening connecting an inside portion of the blade root with an inside portion of the hub.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. Wind turbine rotor comprising a hub, a plurality of blades and at least one pitch system for rotating a blade substantially along its longitudinal axis,
the pitch system comprising a motor, a drive pinion, an annular gear arranged to mesh with the drive pinion and a pitch bearing,
the pitch bearing comprising an outer bearing ring, an inner bearing ring and, between these two bearing rings, one or more rows of rolling elements which allow both bearing rings to rotate relative to each other,
wherein one of the hub and blade is connected to the inner bearing ring and the other of the hub and blade is connected to the outer bearing ring, and wherein
a reinforcing disc is axially fixed to the bearing ring to which the blade is connected at a side facing the hub, the disc being fixed to the bearing ring by the same fasteners connecting the blade to the bearing.

2. Wind turbine rotor according to claim 1, wherein the disc is an annular disc.

3. Wind turbine rotor according to claim any of claims 1-2, wherein the annular gear covers substantially a 95° arc segment.

4. Wind turbine rotor according to any of claims 1-3, wherein the annular gear is made from a plurality of arc segments.

5. Wind turbine rotor according to any of claims 1-4, wherein the annular gear is arranged on the hub.

6. Wind turbine rotor according to any of claims 1-4, wherein the annular gear is arranged on the blade.

7. Wind turbine rotor according to claim 5, wherein the pitch system further comprises a reducer operatively connected with the motor and the drive pinion and the reducer is mounted on the disc.

8. Wind turbine rotor according to claim 6, wherein the disc comprises a curved elongated hole through which the drive pinion fixed to the hub can mesh with the annular gear.

9. Wind turbine rotor according to any of claims 5 - 8, wherein the pitch system further comprises a lubrication system and the components of the lubrication system are arranged on the disc.

10. Wind turbine comprising a wind turbine rotor according to any of claims 1-9.
